# EUROPÄISCHE PATENTSCHRIFT

(11) **EP 2 483 705 B1**
(45) Veröffentlichungstag und Bekanntmachung des Hinweises auf die Patenterteilung: **28.09.2016**
(21) Anmeldenummer: 10744592.6
(22) Anmeldetag: 18.08.2010
(51) Int. Cl.: G01S 3/801, G01H 3/08, G06K 9/00

(54) **VERFAHREN UND VORRICHTUNG ZUM ANALYSIEREN AMPLITUDENMODULIERTER BREITBANDGERÄUSCHE**
METHOD AND DEVICE FOR ANALYZING AMPLITUDE MODULATED BROADBAND NOISE
PROCÉDÉ ET DISPOSITIF POUR L'ANALYSE DE BRUITS À LARGE BANDE MODULÉS EN AMPLITUDE

(30) Priorität: 29.09.2009 DE 102009043417
(43) Veröffentlichungstag der Anmeldung: 08.08.2012
(73) Patentinhaber: ATLAS ELEKTRONIK GmbH, 28309 Bremen (DE)
(72) Erfinder: SCHMIDT, Heiko, 27299 Langwedel (DE); SCHWARZ, Jan-Philip, 28329 Bremen (DE)
(86) Internationale Anmeldenummer: PCT/EP2010/062036
(87) Internationale Veröffentlichungsnummer: WO 2011/038989

(56) Entgegenhaltungen:
- EP-A1- 2 009 459
- GUANG-ZHI SHI ET AL: "Ship noise demodulation line spectrum fusion feature extraction based on the wavelet packet", PROCEEDINGS OF THE 2007 INTERNATIONAL CONFERENCE ON WAVELET ANALYSIS AND PATTERN RECOGNITION IEEE PISCATAWAY, NJ, USA, 2008, Seiten 846-850, XP002611995, ISBN: 978-1-4244-1065-1

## Beschreibung

Die Erfindung betrifft ein Verfahren zum Analysieren von von Körpern abgestrahlten, amplitudenmodulierten Breitbandgeräuschen, insbesondere von von propellerangetriebenen Fahrzeugen abgestrahlten Betriebsgeräuschen, welche als akustische Signale über eine Gruppe von elektroakustischen und/oder optoakustischen Wandlern mit einem nachgeschalteten Richtungsbildner empfangen, digitalisiert und als Eingangssignale einer Analyseeinrichtung der im Oberbegriff des Anspruchs 1 genannten Art übergeben werden. Ferner betrifft die Erfindung eine Vorrichtung zum Ausführen des Verfahrens gemäß Anspruch 5.

Es ist aus der Luftschalltechnik und auch aus der Wasserschalltechnik bekannt, dass Körper anhand der von ihnen abgestrahlten Betriebsgerausche detektiert und geortet werden können. Beispielsweise erzeugen Fahrzeuge, insbesondere propellerangetriebene Fahrzeuge wie Oberflächenschiffe, bemannte oder unbemannte Unterwasserfahrzeuge, Unterwasserlaufkörper, Propellerflugzeuge oder Hubschrauber, während einer Fahrt ein Betriebsgeräusch, welches periodische Lautstärkeschwankungen erzeugt. Diese Lautstärkeschwankungen treten nur auf, wenn die Geräuschquelle nicht nur stochastische Schallsignale abstrahlt, sondern diese Schallsignale durch Antriebsaggregate und sich drehende Teile, beispielsweise Propeller, zu denen auch Schiffsschrauben zählen, hervorgerufen werden. Sie sind mit einer Amplitudenmodulation eines Rauschträgers vergleichbar und charakteristisch für jedes propellerangetriebenes Fahrzeug

Im Wasser treten ab einer bestimmten Propellerblattgeschwindigkeit Kavitationsgeräusche auf. Kavitation bezeichnet die Bildung und Auflösung von Hohlräumen in Flüssigkeiten durch Druckschwankungen. Der an den Propellerblattern entstehende Unterdruck wird dabei so groß, dass Gasbläschen entstehen, deren Implosion kurze akustische Impulse mit großer Intensität erzeugen. Kavitierende Propellerblätter erzeugen somit durch ihre Drehung im Wasser ein amplitudenmoduliertes Breitbandgeräusch, insbesondere im höherfrequenten Bereich. Um die in der Einhüllende des modulierten Signals befindlichen Informationen zu erhalten, wird herkömmlicherweise das bekannte sogenannte DEMON-Analyseverfahren angewandt (DEMON = Detection bzw. Demodulation of Envelope Modulation On Noise).

Die DEMON-Analyse liefert detaillierte Informationen über einen Körper anhand dessen abgestrahlten akustischen Signale. Handelt es sich beispielsweise um abgestrahlte Betriebsgeräusche eines propellerangetriebenen Fahrzeugs, liefert die DEMON-Analyse Auskunft über die Anzahl der antreibenden Propeller, ihre Drehzahl und die Blattzahl, woraus auf den Fahrzeugtyp geschlossen werden kann. Sie beinhaltet einen Bandpass, um die empfangenen Signale auf den informationstragenden Frequenzbereich zu beschränken, einen Demodulator um das empfangene Signal bezüglich seiner Amplitudenmodulation zu demodulieren und zu glätten, einen Hochpass um das empfangene Signal vom Gleichanteil zu befreien und eine Spektralanalyse zum Bilden sogenannter DEMON-Spektren der Einhüllenden der empfangenen Signale und zum Bestimmen der Grundfrequenzen und zugehörigen Harmonischen von Spektrallinien im DEMON-Spektrum.

EP 2009 459 A1 zeigt ein DEMON-Analyseverfahren zur Auswertung von Unterwasserschallsignalen durch Passiv-Sonar-Anlagen. Dabei werden die durch bspw. Schiffsschrauben entstandenen, amplitudenmodulierten Breitbandgeräusche mittels einer aus Tief- und Hochpässen bestehenden Baumfilterbank gefiltert und somit in N einzelne Teilbandsignale zerlegt. Durch die Teilbandsignale werden die zu untersuchenden Frequenzbereiche festgelegt. Die DEMON-Analyse erfolgt hier stets für jedes Teilband. Die derart ermittelten DEMON-Spektren werden anschließend getrennt ausgewertet, wodurch eine Gewichtungsfunktion ermittelt wird, welche angibt, wie informationstragend die einzelnen lokale Bereiche sind. Die Überlagerung bzw. Kombination zu einem als "DEMON" bezeichneten DEMON-Spektrum erfolgt letztendlich durch eine mit geeignet normierten Abständen gewichtete Überlagerung für jeden lokalen Bereich.

Von Guang-Zhi Shi und Jun-Chuan Hu wird in "Ship noise demodulation line spectrum fusion feature extraction based on the wavelet packet" ein Verfahren vorgeschlagen und in den Proceedings of the 2007 International Conference on Wavelet Analaysis and Pattern Recognition IEEE Piscataway, New York, USA, 2008, S. 846- 850, XP002611995, ISBN: 978-1-4244-1065-1 veröffentlicht, welches sich eignet, um die Erkennung von Unterwasserzielen zu verbessern. Dazu werden aus Signalen einer passiven Sonaranlage zunächst manuell Abschnitte des Signals ausgewählt und diese Abschnitte einer Wavelet-Packet-Transformation unterzogen. Hierdurch ergeben sich entsprechend der Ordnung der Wavelet-Packet-Transformationen eine Anzahl von Wavelets. Die Wavelets werden dann fouriertransformiert und nach der Fourier-Transformation jeweils mit einer Entropiebetrachtung bzgl. ihres Informationsgehalts untersucht. Weist ein Wavelet gemäß der Entropieuntersuchung einen hohen Grad an Informationen auf, so wird aus diesem Wavelet ein Signal rekonstruiert. Dieses rekonstruierte Signal wird dann tiefpassgefiltert und nach Digitalisierung und Demodulation als sog. Demodulationsspektrum dargestellt, dass als ein DEMON-Spektrum betrachtet und bzgl. seiner Frequenzlinien untersucht wird.

Herkömmlicherweise wird das gewünschte Demodulationsband für die DEMON-Analyse mittels des Bandpasses manuell von einem Bediener eingestellt Dies geschieht durch Veränderungen der Filtereinstellungen, insbesondere Mittenfrequenz und Bandbreite oder obere und untere Grenzfrequenz und ist nur in einem festen Raster möglich Ferner gibt es bislang keine Indikation für eine optimale Einstellung, wodurch der Bediener gezwungen ist, alle Einstellungen durchzuprobieren. Nachteilig dabei ist, dass die tatsächliche Leistung der DEMON-Analyse im Wesentlichen davon abhängt, ob über eine entsprechende Bedienung des Bandpasses manuell ein geeignetes Demodulationsband eingestellt wurde.

Der Erfindung liegt daher das Problem zugrunde, die Auswahl eines für die DEMON-Analyse geeigneten Demodulationsbandes zu vereinfachen.

Die Erfindung löst dieses Problem durch ein Verfahren bzw eine Vorrichtung mit den Merkmalen des Anspruchs 1 bzw. 5. Über eine Empfangsantenne einer Sonaranlage werden mittels einer Vielzahl von elektroakustischen und/oder optoakustischen Wandlern Wasserschallsignale empfangen, die von auf oder im Wasser befindlichen Körpern abgestrahlt worden sind. Dabei handelt es sich vorzugsweise um Wasserschallsignale mit einer Amplitudenmodulation im Rauschen. Derartige Signale entstehen beispielsweise durch Kavitation erzeugende Propellerblätter einer Schiffsschraube oder andere, periodische Lautstärkeschwankungen erzeugende Antriebsarten, wie z.B. ein Flossenantrieb oder ein Raupenantrieb Eine derartige Sonaranlage weist ferner einen Richtungsbildner auf, in dem in den Wandlern erzeugte Empfangssignale zu Gruppensignalen jeweils einer Richtcharakteristik verarbeitet werden. Dazu werden die Empfangssignale der Wandler derart zeitverzögert, dass sie bezogen auf eine Hauptrichtung der Richtcharakteristik konphas zueinander sind, und anschließend zur Bildung des Gruppensignals aufaddiert. Die Verzögerungszeit, um die das jeweilige Empfangssignal verzögert wird, ist durch die Lage des jeweiligen Wandlers bezüglich der gewünschten Hauptrichtung der Richtcharakteristik bestimmt. Durch unterschiedlich bemessene Zeitverzögerungen können eine Vielzahl von Gruppensignalen und damit Richtcharakteristiken gebildet werden, die um unterschiedlich große, insbesondere horizontale, Winkel gegeneinander und gegen eine Bezugsebene, wie bspw. die Normalenebene der Empfangsantenne geschwenkt sind.

Für die DEMON-Analyse wird das Gruppensignal einer Richtcharakteristik berücksichtigt, welches einer Analyseeinrichtung bereitgestellt wird. Für Aufgaben wie bspw. Detektion, Zieltrennung und Zielverfolgung wird eine mehrkanalige Verarbeitung durchgeführt. Deshalb erfolgt vorteilhafterweise die DEMON-Analyse parallel für alle Richtcharakteristiken bzw. Richtungskanäle.

Um die Auswahl des Demodulationsbandes der DEMON-Analyse zu vereinfachen, werden die Einstellungen der Analyseeinheit bewertet, wobei für die Bewertung ein von den Einstellungen der Analyseeinrichtung abhängiges Bewertungskriterium anhand der DEMON-Spektren ermittelt wird. Mittels eines adaptiven Bandgrenzenmoduls werden die Filtereinstellungen des Bandpasses in Abhängigkeit des Bewertungskriteriums gesteuert, um die Einstellungen der Analyseeinrichtung zu verändern. Dabei können die Filtereinstellungen automatisch verändert werden oder aber manuell durch einen Bediener aufgrund entsprechender Ausgabewerte.

Das adaptive Bandgrenzenmodul verändert die Filtereinstellungen des Bandpasses mit dem Ziel, den Wert des Bewertungskriteriums zu maximieren. Dies erfolgt entweder durch Verändern der Mittenfrequenz und der Bandbreite des Filters oder durch Verändern der oberen und unteren Grenzfrequenz.

Der Vorteil des Einsatzes eines adaptiven Bandgrenzenmoduls ist eine Verbesserung der Detektionsleistung und/oder der Klassifizierungsergebnisse. Ferner wird durch eine automatische Einstellung des Demodulationsbandes die Trennung und Verfolgung von Zielen verbessert und vereinfacht. Ein weiterer Vorteil des erfindungsgemäßen Verfahrens liegt in der Möglichkeit einer Bewertung der Einstellungen der Analyseeinrichtung. Somit liegt ein Maß für die Qualität oder Güte der Einstellung der Analyseeinriclltung vor. Dieses Maß wird vorteilhafterweise zum Auffinden der optimalen Einstellung verwendet.

Gemäß der Erfindung wird das Bewertungskriterium aus einem Verhältnis aus der stärksten Spektrallinie des DEMON-Spektrums zu einem Rauschwert des DEMON-Spektrums oder aus einem Verhältnis aus einem Gesamtpegel, der sich aus der Summe der Pegel von Spektrallinien eines zuvor ermittelten Linienmusters des DEMON-Spektrums ergibt, zu einem Rauschwert des DEMON-Spektrums gebildet. Vorteilhafterweise werden die DEMON-Spektren dafür über eine vorbestimmte Zeit gemittelt. Der Rauschwert des DEMON-Spektrums wird beispielsweise nach dem Median-Prinzip aus allen vorliegenden Spektralwerten oder aber als Mittelwert aller nicht linienförmigen Spektralanteile ermittelt.

Gemäß der Erfindung wird das Bewertungskriterium als S/N-Wert herangezogen. Die DEMON-Spektren werden dafür über eine vorbestimmte Zeit gemittelt. Die Linienmuster werden hierbei gebildet, indem die stärksten Spektrallinien jeweils mit ihren Harmonischen zusammengefasst werden. Anschließend wird jeweils ein Gesamtpegel aus der Summe der Pegel der zusammengefassten Spektrallinien berechnet. Für das Bewertungskriterium wird vorteilhafterweise der maximale Gesamtpegel herangezogen.

Gemäß einer weiteren Ausführungsform der Erfindung erfolgt die Veränderung der Filtereinstellungen des Bandpasses iterativ. Dazu werden die Eingangssignale der Analyseeinrichtung über eine vorbestimmte Zeit als ein Datenblock zwischengespeichert um die Analyse, die Ermittlung des Bewertungskriteriums und das Verändern der Filtereinstellungen des Bandpasses mehrfach auf den gleichen Datenblock anzuwenden. Dies geschieht so lange, bis ein Maximum des Bewertungskriteriums erreicht ist. Dieses Verfahren ist besonders vorteilhaft für die einkanalige Analyse für einen Richtungskanal.

Gemäß einer weiteren Ausführungsform der Erfindung erfolgt die Veränderung der Filtereinstellungen des Bandpasses kontinuierlich, wobei die Ermittlung des Bewertungskriteriums und das Verändern der Filtereinstellungen des Bandpasses nur einmal erfolgen, so dass die Veränderungen der Filtereinstellungen auf die nachfolgende Analyse angewandt werden. Das adaptive Bandgrenzenmodul sorgt, ausgehend von festen Startzeiten, für die Veränderung der Filtereinstellungen in kleinen Schritten. Führt die Veränderung zu einer Verbesserung des Bewertungskriteriums, wird der Bandpass entsprechend angepasst. Kommt es hingegen zu einer Verschlechterung des Bewertungskriteriums, werden die Filtereinstellungen im nächsten Analysedurchlauf in entgegengesetzter Richtung variiert. Bei der Wahl der Schrittweite für die Veränderungen der Filtereinstellungen ist zu beachten, dass, beispielsweise aufgrund einer Zielverfolgung, sich die bestmöglichen Filtereinstellungen im Laufe der Zeit ändern können. Ist dies der Fall, dann ist die Schrittweite mindestens so groß zu wählen, dass das adaptive Bandgrenzenmodul der zu erwartenden Änderung auch folgen kann. Dieses Verfahren ist besonders vorteilhaft für die mehrkanalige Analyse und verbessert die Eigenschaft der Zieltrennung und Zielverfolgung.

Gemäß einer weiteren Ausführungsform der Erfindung erfolgt die Analyse der amplitudenmodulierten Breitbandgeräusche einkanalig oder parallel für mehrere, vom Richtungsbildner erzeugten Richtungskanäle. Wird die Analyse auf einzelne Richtungskanäle in einem festen Raster angewandt, verbessert sich vorteilhaft die Detektionsleistung. Wird die Analyse auf gesteuerte Richtungskanäle angewandt, verbessert sich vorteilhaft das Ergebnis einer Zieltrennung und Zielverfolgung. Dabei wird bei der parallelen, mehrkanaligen Verarbeitung ein Richtungskanal ausgewählt, welcher das Bewertungskriterium zur Verfügung stellt. Das ist entweder der Richtungskanal mit dem maximalen Bewertungskriterium oder aber die Auswahl erfolgt gesteuert, beispielsweise über eine Zielverfolgungseinrichtung. Bei der Verfolgung von mehreren Zielen wird die Analyse für jedes Ziel einzeln durchgeführt.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:
- Fig. 1: ein Blockschaltbild der Analyse abgestrahlter Betriebsgeräusche,
- Fig. 2: ein typisches gemitteltes DEMON-Spektrum.

Die Erfindung ist für den Einsatz des erfindungsgemäßen Verfahrens in der Wasserschalltechnik im Zusammenhang mit einer Sonaranlage näher beschrieben. Die nachfolgenden Erläuterungen sind jedoch auch auf andere Verfahren, wie beispielsweise Verfahren in der Luftschalltechnik anwendbar.

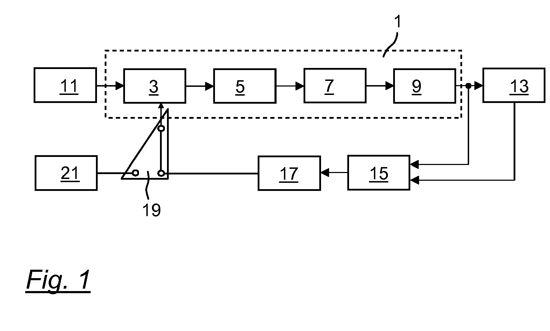

Fig. 1 zeigt ein Blockschaltbild zur Erläuterung einer Analyse von amplitudenmodulierten Breitbandgeräuschen, die beispielsweise von kavitierenden, d.h. Kavitation erzeugenden Propellerblättern propellerangetriebener Fahrzeuge erzeugt werden, gemäß einem Ausführungsbeispiel der Erfindung.

Die Erfindung ist jedoch nicht auf propellerangetriebene Fahrzeuge beschränkt. Alle Signale mit einer Amplitudenmodulation im Rauschen können mittels der DEMON-Analyse untersucht werden. Dabei können die Signale von Körpern herrühren, die zu Luftblasenbildung führen, wie z.B. Schwimmer, Raddampfer oder Ruderboote, indem diese Körper aufgrund ihrer periodischen Bewegungen im Wasser Luftblasen beim Eintauchen der Arme bzw. Ruder oder Radschaufeln erzeugen. Auch Taucher können bei periodischem Ein- und Ausatmen mit ihrer Atemluft ein amplitudenmoduliertes Geräusch erzeugen. Ebenso erzeugen Jetboote, d.h. kleine sog. Wassermotorräder bspw. für bis zu vier Personen, amplitudenmodulierte Breitbandgeräusche aufgrund einer Luftblasenbildung beim Antrieb. Ferner erzeugen weitere Antriebsarten periodische Lautstärkeschwankungen, wie z.B. ein Flossenantrieb oder ein Raupenantrieb, wodurch ebenfalls Signale mit einer Amplitudenmodulation im Rauschen entstehen.

Dargestellt ist eine Analyseeinrichtung 1, welche die herkömmlicherweise bekannten Komponenten wie Bandpass 3, Demodulator 5, Hochpass 7 sowie die Spektralanalyse 9 aufweist.

Ferner beinhaltet das Blockschaltbild Vorverarbeitungsmittel 11 in der die Wasserschallsignale mittels der Wandler empfangen und elektrische Empfangssignale erzeugt werden. Die Vorverarbeitungsmittel umfassen einen Richtungsbildner, der diese Empfangssignale in bekannter Weise zu Gruppensignalen zugehöriger Richtcharakteristiken verarbeitet.

Das Gruppensignal einer Richtcharakteristik bzw. eines Richtungskanals wird der Analyseeinrichtung 1 zur Durchführung einer DEMON-Analyse übergeben. Das Gruppensignal wird mittels des Bandpasses 3 gefiltert, vom Demodulator 5 gleichgerichtet und geglättet und mittels des Hochpasses 7 vom Gleichanteil befreit. Anschließend wird das Signal einer Spektralanalyse 9 unterzogen, um nach Anwendung weiterer bildgebender Verfahren als BTR (BTR = Bearing Time Record), d.h. Wasserfalldarstellung der Peilung über die Zeit, oder FRAZ (FRAZ = Frequency Azimuth Display), d.h. Darstellung der Frequenz über Azimuth, dargestellt zu werden. Die Spektralanalyse 9 erzeugt, bspw. mittels einer FFT (FFT = Fast Fourier Transformation), ein sog. DEMON-Spektrum, welches ein Frequenzspektrum der Einhüllenden des empfangenen Signals ist und periodische Modulationskomponenten hervorhebt. Das Ergebnis der Spektralanalyse 9 wird sowohl einer Zielverfolgungseinrichtung 13 als auch einer Bewertungseinrichtung 15 übergeben.

Anhand der DEMON-Spektren erfolgt eine Bewertung der Einstellung der Analyseeinrichtung 1, indem in einer Bewertungseinrichtung 15 ein aus der Einstellung der Analyseeinrichtung 1 hervorgehendes Bewertungskriterium ermittelt wird. Dieses Bewertungskriterium wird einem adaptiven Bandgrenzenmodul 17 übergeben.

Darüber hinaus beinhaltet die Analyse eine Vorrichtung, beispielsweise einen Schalter 19, zur Auswahl einer manuellen Veränderung der Filtergrenzen des Bandpasses 3 durch einen Bediener 21 oder einer automatischen Veränderung der Filtereinstellung des Bandpasses 3 aufgrund der Ausgabewerte des adaptiven Bandgrenzenmoduls 17.

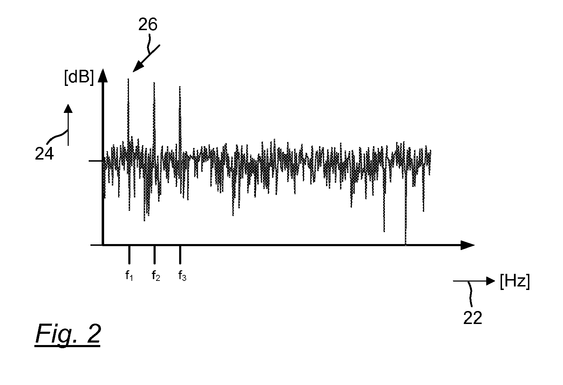

Fig. 2 zeigt ein typisches gemitteltes DEMON-Spektrum, wie es nach der Spektralanalyse 9 vorliegt. Auf der horizontalen Achse 22 ist die Frequenz, vorzugsweise in Hertz, aufgetragen und auf der vertikalen Achse 24 der zugehörige Pegel des DEMON-Spektrums in Dezibel bzw. die Amplitude des DEMON-Spektrums. Es sind deutlich einzelne Spektrallinien 26 als Linien im Hintergrundrauschen erkennbar.

Für die Bewertung der Einstellungen der Analyseeinrichtung 1 werden die DEMON-Spektren über einen vorgegebenen Zeitraum gemäß einer sog. Verarbeitungsblocklänge gemittelt und der Bewertungseinrichtung 15 zur Ermittlung des Bewertungskriteriums übergeben.

Die Bewertung erfolgt bspw. durch die Betrachtung einzelner Spektrallinien 26. Dazu wird ein Verhältnis aus der stärksten Spektrallinie zum Rauschpegel ermittelt. Ein derart ermitteltes Verhältnis bezeichnet das Bewertungskriterium und wird als S/N-Wert herangezogen. Der Rauschpegel wird beispielsweise nach dem Median-Prinzip aus allen vorliegenden Spektralwerten oder aber als Mittelwert aller nicht linienförmigen Spektralanteile ermittelt.

Ferner ist es denkbar für die Bewertung der Einstellung der Analyseeinrichtung ganze Linienmuster heranzuziehen. Diese werden gebildet, indem die stärksten Spektrallinien 26 jeweils mit ihren Harmonischen zusammengefasst werden. Anschließend wird jeweils ein Gesamtpegel aus der Summe der Pegel der zusammengefassten Spektrallinien berechnet. Das Verhältnis aus dem maximalen Gesamtpegel zum Rauschpegel wird als S/N-Wert herangezogen und entspricht dem Bewertungskriterium.

Das adaptive Bandgrenzenmodul 17 steuert die Filtereinstellungen des Bandpasses 3 mit dem Ziel, dass der von der Bewertungseinrichtung 15 ermittelte S/N-Wert maximal wird.

Bei einer iterativen Veränderung der Filtereinstellungen, werden die Eingangssignale der Analyseeinrichtung 1 über eine vorbestimmte Zeit als ein Datenblock zwischengespeichert, damit die Analyse, die Ermittlung des Bewertungskriteriums und die Veränderung der Filtereinstellungen mehrfach auf den gleichen Datenblock erfolgen kann, und zwar solange, bis ein Maximum des S/N-Wertes der Bewertungseinrichtung 15 bzw. ein maximales Bewertungskriterium erreicht ist.

Bei einer kontinuierlichen Veränderung der Filtereinstellungen, werden die Ermittlung des Bewertungskriteriums und die Veränderung der Filtereinstellungen nur einmal auf den Bandpass 3 angewandt. Das bedeutet, dass diese Veränderungen erst auf die nachfolgenden Eingangssignale der Analyseeinrichtung Auswirkungen haben.

Eine beispielhafte Vorgehensweise wäre dabei, ausgehend von festen Starteinstellungen der Filtereinstellungen des Bandpasses 3, beide Filtergrenzen nacheinander in kleinen Schritten, beispielsweise um 100 Hz, zu verändern. Typische Filtereinstellungen sind bspw. 4 kHz bis 6 kHz. Dabei wird für jede Filtereinstellung die Bewertung durchgeführt. Führt die Veränderung der Filtereinstellung zu einer Verbesserung des Bewertungskriteriums, indem der S/N-Wert erhöht wird, wird der Bandpass 3 entsprechend angepasst. Kommt es jedoch zu einer Verschlechterung des Bewertungskriteriums, indem der S/N-Wert verringert wird, wird die Filtereinstellung im nächsten Analysedurchlauf in entgegensetzter Richtung variiert. Bei der Wahl der Schrittweite sind Frequenzselektivität des zu erwartenden Zielsignals und eine zu erreichende Trennschärfe des Bandpasses 3 entscheidend. Ist nämlich zu erwarten, dass sich die bestmöglichen Filtereinstellungen im Laufe der Zeit ändern, dann ist die Schrittweite mindestens so groß zu wählen, dass das adaptive Begrenzungsmodul 17 der zu erwartenden Änderung auch folgen kann.

Die Veränderungen der Filtereinstellungen des Bandpasses 3 mittels des adaptiven Bandgrenzenmoduls 17 werden in Abhängigkeit des von der Bewertungseinrichtung 15 ermittelten Bewertungskriteriums durchgeführt. Je größer der ermittelte S/N-Wert bzw. das Bewertungskriterium ist, umso geeigneter ist das für die Analyse der Geräusche eingestellte Demodulationsband. Dabei ist es denkbar die Veränderungen der Filtereinstellungen statt automatisch von dem adaptiven Bandgrenzenmodul 17 manuell von einem Bediener 21 vornehmen zulassen. Dies kann wie herkömmlicherweise durch Probieren erfolgen, oder aber aufgrund von entsprechend optimierten Ausgabewerten des adaptiven Bandgrenzenmoduls 17.

Das erfindungsgemäße Verfahren kann sowohl auf einzelne Richtungskanäle in einem festen Raster angewandt werden als auch auf gesteuerte Richtungskanäle. Liegt eine parallele, mehrkanalige Verarbeitung der Analyse vor, wird ein Richtungskanal ausgewählt, dessen DEMON-Spektren für die Ermittlung des Bewertungskriteriums herangezogen werden. Dieses Bewertungskriterium wird dem adaptiven Bandgrenzenmodul 17 zur Veränderung der Filtereinstellungen des Bandpasses 3 übergeben. Der ausgewählte Richtungskanal ist entweder der Richtungskanal mit dem maximalen Bewertungskriterium oder aber die Auswahl erfolgt gesteuert, beispielsweise über die Zielverfolgungseinrichtung 13. Bei der Verfolgung von mehreren Zielen ist es erforderlich die Analyse für jedes Ziel einzeln durchzuführen.

Mit dem erfindungsgemäßen Verfahren können alle Geräuschquellen analysiert werden, bei denen eine Amplitudenmodulation auftritt.

Alle in der vorstehenden Beschreibung sowie in den Ansprüchen genannten Merkmale sind erfindungsgemäß sowohl einzeln auch in beliebiger Kombination miteinander einsetzbar. Die Erfindung ist daher nicht auf die beschriebenen bzw. beanspruchten Merkmalskombinationen beschränkt. Vielmehr sind alle Kombinationen von Einzelmerkmalen als offenbart zu betrachten.

## Patentansprüche

1. Verfahren zum Analysieren von von Körpern abgestrahlten, amplitudenmodulierten Breitbandgeräuschen, welche als akustische Signale mittels einer Gruppe von elektroakustischen und/oder optoakustischen Wandlern mit einem nachgeschalteten Richtungsbildner empfangen, digitalisiert und als Eingangssignale einer Analyseeinrichtung (1) übergeben werden, in der sie entsprechend den Einstellungen der Analyseeinrichtung (1) mittels eines Bandpasses (3) gefiltert, mittels eines Demodulators (5) bezüglich ihrer Einhüllenden demoduliert, mittels eines Hochpasses (7) von einem Gleichanteil befreit und einer Spektralanalyse (9) unterzogen werden, welche DEMON-Spektren erzeugt,
**dadurch gekennzeichnet, dass**
die Einstellungen der Analyseeinrichtung (1) bewertet werden, für die Bewertung ein von den Einstellungen der Analyseeinrichtung abhängiges Bewertungskriterium anhand der DEMON-Spektren ermittelt wird, wobei das Bewertungskriterium aus einem Verhältnis aus der stärksten Spektrallinie oder einem Gesamtpegel des DEMON-Spektrums zu einem Rauschwert des DEMON-Spektrums gebildet wird, wobei sich der Gesamtpegel aus der Summe der Pegel von Spektrallinien eines zuvor ermittelten Linienmusters des DEMON-Spektrums ergibt und das Linienmuster gebildet wird, indem die stärksten Spektrallinien jeweils mit ihren Harmonischen zusammengefasst werden, und
die Einstellungen der Analyseeinrichtung verändert werden durch Steuerung der Filtereinstellungen des Bandpasses (3) durch Verändern der Mittenfrequenz und der Bandbreite des Bandpasses oder durch Verändern der oberen und unteren Grenzfrequenz des Bandpasses in Abhängigkeit von dem Bewertungskriterium mittels eines adaptiven Bandgrenzenmoduls (17).

2. Verfahren nach Anspruch 1,
**dadurch gekennzeichnet, dass**
die Veränderung der Filtereinstellungen des Bandpasses (3) iterativ erfolgt, wobei die Eingangssignale der Analyseeinrichtung (1) über eine vorbestimmte Zeit als ein Datenblock zwischengespeichert werden und somit die Analyse, die Ermittlung des Bewertungskriteriums und das Verändern der Filtereinstellungen mehrfach auf den gleichen Datenblock angewandt wird und zwar solange bis ein Maximum des Bewertungskriteriums erreicht ist.

3. Verfahren nach Anspruch 1,
**dadurch gekennzeichnet, dass**
die Veränderung der Filtereinstellungen des Bandpasses (3) kontinuierlich erfolgt, wobei die Ermittlung des Bewertungskriteriums und das Verändern der Filtereinstellungen nur einmal während eines Analysedurchlaufs erfolgen, so dass die Veränderungen der Filtereinstellungen auf den nachfolgenden Analysedurchlauf angewandt werden.

4. Verfahren nach einem der vorhergehenden Ansprüchen,
**dadurch gekennzeichnet, dass**
das Analysieren einkanalig oder parallel für mehrere, von dem Richtungsbildner erzeugten Richtungskanäle erfolgt, wobei bei der parallelen, mehrkanaligen Verarbeitung ein Richtungskanal ausgewählt wird, der die DEMON-Spektren für die Ermittlung des Bewertungskriteriums bereitstellt.

5. Vorrichtung zur Analysierung von von Körpern abgestrahlten, amplitudenmodulierten Breitbandgeräuschen, welche als akustische Signale über eine Gruppe von elektroakustischen und/oder optoakustischen Wandlern mit einem nachgeschalteten Richtungsbildner empfangen, digitalisiert und als Eingangssignale einer Analyseeinrichtung (1) übergeben werden, in der sie entsprechend den Einstellungen der Analyseeinrichtung (1) mittels eines Bandpasses (3) gefiltert, mittels eines Demodulators (5) bezüglich ihrer Einhüllenden demoduliert, mittels eines Hochpasses (7) von einem Gleichanteil befreit und einer Spektralanalyse (9) unterzogen werden, welche DEMON-Spektren erzeugt,
**gekennzeichnet durch**
eine Bewertungseinheit (15) zum Bewerten der Einstellungen der Analyseeinrichtung (1) und zum Ermitteln eines von den Einstellungen der Analyseeinrichtung abhängigen Bewertungskriteriums anhand der DEMON-Spektren, wobei das Bewertungskriterium aus einem Verhältnis aus der stärksten Spektrallinie oder einem Gesamtpegel des DEMON-Spektrums zu einem Rauschwert des DEMON-Spektrums ermittelt wird, wobei sich der Gesamtpegel aus der Summe der Pegel von Spektrallinien eines zuvor ermittelten Linienmusters des DEMON-Spektrums ergibt und das Linienmuster gebildet wird, indem die stärksten Spektrallinien jeweils mit ihren Harmonischen zusammengefasst werden, und
ein adaptives Bandgrenzenmodul (17) zur Veränderung der Einstellungen der Analyseeinrichtung **durch** Steuerung der Filtereinstellungen des Bandpasses (3) **durch** Verändern der Mittenfrequenz und der Bandbreite des Bandpasses oder **durch** Verändern der oberen und unteren Grenzfrequenz des Bandpasses in Abhängigkeit von dem Bewertungskriterium.

6. Vorrichtung nach Anspruch 5,
**gekennzeichnet durch**
eine Iterativ-Berechnungseinheit zur iterativen Veränderung der Filtereinstellungen des Bandpasses (3) mittels des adaptiven Bandgrenzenmoduls (17), indem die Eingangssignale der Analyseeinrichtung (1) als ein Datenblock zwischengespeichert werden und somit die Analyse, die Ermittlung des Bewertungskriteriums und das Verändern der Filtereinstellungen mehrfach auf den gleichen Datenblock anwendbar sind und zwar solange bis ein Maximum des Bewertungskriteriums erreicht ist.

7. Vorrichtung nach Anspruch 5,
**gekennzeichnet durch**
eine Kontinuierlich-Berechnungseinheit zur kontinuierlichen Veränderung der Filtereinstellungen des Bandpasses (3) mittels des adaptiven Bandgrenzenmoduls (17), indem die Ermittlung des Bewertungskriteriums und das Verändern der Filtereinstellungen nur einmal während eines Analysedurchlaufs erfolgt, so dass die Veränderungen der Filtereinstellungen auf den nachfolgenden Analysedurchlauf anwendbar sind.

8. Vorrichtung nach einem der Ansprüche 5 bis 7,
**gekennzeichnet durch**
eine Auswahleinheit zum Auswählen eines von dem Richtungsbildner erzeugten Richtungskanals, welcher bei einer einkanaligen oder parallelen, mehrkanaligen Verarbeitung die DEMON-Spektren für die Ermittelung des Bewertungskriteriums bereitstellt.

## Claims

1. Method for analysing amplitude-modulated broadband noise radiated by bodies, which noise is received as acoustic signals by a group of electroacoustic and/or optoacoustic transducers with a direction former connected downstream and is digitalised and passed as input signals to an analysis device (1), in which they are filtered according to the settings of the analysis device (1) by a bandpass (3), demodulated by a demodulator (5) with respect to their envelopes, liberated from a DC component by a high pass (7) and subjected to a spectral analysis (9), which generates DEMON spectra,
**characterised by**
that the settings of the analysis device (1) are evaluated, an evaluation criterion as a function of the settings of the analysis device is determined with reference to the DEMON spectra, wherein the evaluation criterion is formed from a ratio of the strongest spectral line or an overall level of the DEMON spectrum to a noise value of the DEMON spectrum, wherein the overall level results from the sum of the levels of spectral lines of a previously determined line pattern of the DEMON spectrum and the line pattern is formed in that the strongest spectral lines are summed respectively with their harmonics, and the settings of the analysis device are changed by control of the filter settings of the bandpass (3) by changing the centre frequency and the bandwidth of the bandpass or by changing the upper and lower limit frequency of the bandpass as a function of the evaluation criterion by means of an adaptive band limit module (17).

2. Method according to claim 1,
**characterised by**
that the change in the filter settings of the bandpass (3) takes place iteratively, wherein the input signals of the analysis device (1) are stored intermediately over a predetermined time as a data block and thus the analysis, the determination of the evaluation criterion and the change of the filter settings are applied multiply to the same data block, to be precise until a maximum of the evaluation criterion is attained.

3. Method according to claim 1,
**characterised by**
that the change of the filter settings of the bandpass (3) takes place continuously, wherein the determination of the evaluation criterion and the change of the filter settings take place only once during an analysis run, so that the changes in the filter settings are applied to the following analysis run.

4. Method according to one of the preceding claims,
**characterised by**
that the analysis takes place in a single channel or parallel for several directional channels produced by the direction former, wherein in the parallel, multichannel processing one directional channel is selected, which provides the DEMON spectra for the determination of the evaluation criterion.

5. Device for analysing amplitude-modulated broadband noise radiated by bodies, which noise is received as acoustic signals via a group of electroacoustic and/or optoacoustic transducers with a direction former connected downstream and is digitalised and passed as input signals to an analysis device (1), in which they are filtered according to the settings of the analysis device (1) by a bandpass (3), demodulated by a demodulator (5) with respect to their envelopes, liberated from a DC component by a high pass (7) and subjected to a spectral analysis (9), which generates DEMON spectra,
**characterised by**
an evaluation unit (15) for evaluating the settings of the analysis device (1) and for determining an evaluation criterion as a function of the settings of the analysis device with reference to the DEMON spectra, wherein the evaluation criterion is formed from a ratio of the strongest spectral line or an overall level of the DEMON spectrum to a noise value of the DEMON spectrum, wherein the overall level results from the sum of the levels of spectral lines of a previously determined line pattern of the DEMON spectrum and the line pattern is formed in that the strongest spectral lines are summed respectively with their harmonics, and by an adaptive band limit module (17) for changing the settings of the analysis device by control of the filter settings of the bandpass (3) by changing the centre frequency and the bandwidth of the bandpass or by changing the upper and lower limit frequency of the bandpass as a function of the evaluation criterion.

6. Device according to claim 5,
**characterised by**
an iterative calculation unit for the iterative change of the filter settings of the bandpass (3) by means of the adaptive band limit module (17), in that the input signals of the analysis device (1) are stored intermediately as a data block and thus the analysis, the determination of the evaluation criterion and the change of the filter settings are applicable multiply to the same data block, to be precise until a maximum of the evaluation criterion is attained.

7. Device according to claim 5,
**characterised by**
a continuous calculation unit for the continuous change of the filter settings of the bandpass (3) by means of the adaptive band limit module (17), in that the determination of the evaluation criterion and the change of the filter settings take place only once during an analysis run, so that the changes in the filter settings are applicable to the following analysis run.

8. Device according to one of claims 5 to 7,
**characterised by**
a selection unit for the selection of one directional channel produced by the direction former, which in a single-channel or parallel, multichannel processing provides the DEMON spectra for the determination of the evaluation criterion.

## Revendications

1. Procédé d'analyse de bruits large bande, modulés en amplitude et émis par des corps, qui sont reçus et numérisés en tant que signaux acoustiques par un groupe de transducteurs électroacoustiques et/ou optoacoustiques, à la suite duquel est branché un générateur de direction, puis qui sont transmis en tant que signaux d'entrée à un dispositif d'analyse (1), dans lequel, selon les réglages du dispositif d'analyse (1), ils sont filtrés par un filtre passe-bande (3), leurs enveloppes sont démodulées par un démodulateur (5), ils sont débarrassés d'une composante continue par un filtre passe-haut (7) et soumis à une analyse spectrale (9) produisant des spectres DEMON,
**caractérisé en ce que**
les réglages du dispositif d'analyse (1) sont évalués, un critère d'évaluation dépendant des réglages du dispositif d'analyse est obtenu sur la base des spectres DEMON, où le critère d'évaluation est construit à partir du rapport entre la plus forte raie spectrale ou un niveau général du spectre DEMON et une valeur de bruit du spectre DEMON, où le niveau général provient de la somme des niveaux des raies spectrales d'une figure de raies obtenue précédemment du spectre DEMON, et la figure de raies est formée en combinant les plus fortes raies spectrales avec leurs harmoniques,
et
les réglages du dispositif d'analyse sont modifiés par commande des réglages du filtre passe-bande (3) par modification de la fréquence médiane et de la largeur de bande du filtre passe-bande ou par modification des fréquences limites supérieure et inférieure du filtre passe-bande selon le critère d'évaluation au moyen d'un module adaptatif d'extrémités de bande (17).

2. Procédé selon la revendication 1,
**caractérisé en ce que**
la modification des réglages du filtre passe-bande (3) est itérative, où les signaux d'entrée du dispositif d'analyse (1) sont enregistrés en tant que bloc de données pendant une durée déterminée afin que l'analyse, l'obtention du critère d'évaluation et la modification des réglages de filtre portent plusieurs fois sur le même bloc de données, et ce jusqu'à ce que le critère d'évaluation atteigne un maximum.

3. Procédé selon la revendication 1
**caractérisé en ce que**
la modification des réglages du filtre passe-bande (3) est continue, où l'obtention du critère d'évaluation et la modification des réglages du filtre ont lieu une seule fois pendant l'exécution de l'analyse, afin que les modifications des réglages de filtre soient appliquées à l'exécution suivante de l'analyse.

4. Procédé selon l'une des revendications précédentes
**caractérisé en ce que**
l'analyse est monocanal ou parallèle pour plusieurs canaux de direction obtenus par le générateur de direction, où, lors du traitement parallèle pluricanal, il est choisi un canal de direction qui met à disposition les spectres DEMON pour l'obtention du critère d'évaluation.

5. Dispositif d'analyse de bruits large bande, modulés en amplitude et émis par des corps, qui sont reçus et numérisés en tant que signaux acoustiques par un groupe de transducteurs électroacoustiques et/ou optoacoustiques, à la suite duquel est branché un générateur de direction, puis qui sont transmis en tant que signaux d'entrée à un dispositif d'analyse (1), dans lequel, selon les réglages du dispositif d'analyse (1), ils sont filtrés par un filtre passe-bande (3), leurs enveloppes sont démodulées par un démodulateur (5), ils sont débarrassés d'une composante continue par un filtre passe-haut (7) et soumis à une analyse spectrale (9) produisant des spectres DEMON
**caractérisé par**
une unité d'évaluation (15) pour évaluer les réglages du dispositif d'analyse (1) et obtenir un critère d'évaluation dépendant des réglages du dispositif d'analyse sur la base des spectres DEMON, où le critère d'évaluation est construit à partir du rapport entre la plus forte raie spectrale ou un niveau général du spectre DEMON et une valeur de bruit du spectre DEMON, où le niveau général provient de la somme des niveaux des raies spectrales d'une figure de raies obtenue précédemment du spectre DEMON, et la figure de raies est formée en combinant les plus fortes raies spectrales avec leurs harmoniques et
un module adaptatif d'extrémités de bande (17) pour la modification des réglages du dispositif d'analyse par commande des réglages du filtre passe-bande (3) par modification de la fréquence médiane et de la largeur de bande du filtre passe-bande ou par modification des fréquences limites supérieure et inférieure du filtre passe-bande selon le critère d'évaluation.

6. Dispositif selon la revendication 5
**caractérisé par**
une unité de calcul itérative pour la modification itérative des réglages du filtre passe-bande (3) au moyen du module adaptatif d'extrémités de bande (17), pour lequel les signaux d'entrée du dispositif d'analyse (1) sont enregistrés en tant que bloc de données pendant une durée déterminée afin que l'analyse, l'obtention du critère d'évaluation et la modification des réglages de filtre puisse porter plusieurs fois sur le même bloc de données, et ce jusqu'à ce que le critère d'évaluation atteigne un maximum.

7. Dispositif selon la revendication 5,
**caractérisé par**
une unité de calcul continu pour la modification continue des réglages du filtre passe-bande (3) au moyen du module adaptatif d'extrémités de bande (17), où l'obtention du critère d'évaluation et la modification des réglages du filtre ont lieu une seule fois pendant l'exécution de l'analyse, afin que les modifications des réglages de filtre puissent être appliquées à l'exécution suivante de l'analyse.

8. Dispositif selon l'une des revendications 5 à 7,
**caractérisé par**
une unité de sélection pour choisir un des canaux de direction obtenus par le générateur de direction, qui, lors du traitement monocanal ou parallèle pluricanal, mette à disposition les spectres DEMON pour l'obtention du critère d'évaluation.
